# FASCICULE DE BREVET EUROPEEN

(11) **EP 3 251 903 B1**
(45) Date de publication et mention de la délivrance du brevet: **03.04.2019**
(21) Numéro de dépôt: 17170754.0
(22) Date de dépôt: 12.05.2017
(51) Int. Cl.: B60S 1/38

(54) **EMBOUT D'EXTREMITE D'UN BALAI D'ESSUYAGE ET ENSEMBLE D'ESSUYAGE CORRESPONDANT**
ENDSTÜCK EINES SCHEIBENWISCHERBLATTS, UND ENTSPRECHENDE SCHEIBENWISCHANLAGE
END TIP OF A WIPER BLADE AND CORRESPONDING WIPER ASSEMBLY

(30) Priorité: 31.05.2016 FR 1654874
(43) Date de publication de la demande: 06.12.2017
(73) Titulaire: Valeo Systèmes d'Essuyage, 78322 Le Mesnil Saint Denis (FR)
(72) Inventeur: LAURENS, Romain, 63500 ISSOIRE (FR); CHEVALIER, Stéphane, 63500 ISSOIRE (FR)
(74) Mandataire: Vincent, Catherine Marie Marguerite

(56) Documents cités:
- FR-A1- 2 905 650
- FR-A1- 2 922 502

## Description

La présente invention concerne le domaine de l'essuyage des vitres des véhicules automobiles et notamment le domaine des ensembles d'essuyage à balai. Plus spécifiquement, la présente invention se rapporte à un embout d'extrémité qui est monté sur au moins une extrémité d'une lame de balai d'essuyage.

Les vitres de véhicules sont généralement équipées d'un ensemble d'essuyage comportant au moins un bras d'essuyage entraîné en rotation par des moyens motorisés et un balai d'essuyage disposé à l'extrémité libre du bras. Les balais d'essuyage comprennent généralement un élément de support de montage d'une lame d'essuyage en caoutchouc apte à être plaquée contre la vitre à nettoyer, et au moins un embout d'extrémité pour bloquer la lame préalablement introduite dans l'élément de support par coulissement longitudinal.

Par ailleurs, on connaît des balais qui comportent un ou plusieurs éléments de rigidification, notamment sous forme de vertèbre(s), qui s'étendent sensiblement sur toute la longueur du balai et dont la fonction est d'assurer le contact de la lame d'essuyage avec le pare-brise, par un effet ressort de l'élément de rigidification. Ces éléments de rigidification sont en outre configurés pour participer à la fixation du balai dans les embouts d'extrémités, par des encoches formées dans les éléments et de formes complémentaires de moyens flexibles portés par les embouts. FR-A-922502 montre le préambule de la revendication 1.

Chaque embout d'extrémité comprend un couloir de réception configuré pour accueillir et bloquer une extrémité d'au moins un élément de rigidification associé au balai. Le couloir de réception est donc agencé en fonction de la forme et des dimensions de l'élément de rigidification. Or, il s'avère que les formes et les dimensions des extrémités des éléments de rigidification peuvent varier en fonction du modèle de balai d'essuyage. De ce fait, des embouts d'extrémité spécifiques doivent être utilisés pour chaque modèle de balai d'essuyage.

Dans ce contexte, l'invention vise à proposer un embout d'extrémité standard permettant de s'adapter à différents balais d'essuyage respectivement munis d'un élément de rigidification aux dimensions spécifiques et qui s'étend sensiblement selon un axe d'allongement longitudinal.

L'embout selon l'invention comporte notamment un couloir de réception de l'élément de rigidification qui débouche au niveau d'une première extrémité longitudinale de l'embout. L'embout comporte également des premières butées de positionnement ainsi qu'un premier moyen de verrouillage de l'élément de rigidification à l'intérieur du couloir de réception. Les premières butées de positionnement visent à guider l'insertion d'un premier élément de rigidification dans le couloir de réception, tandis que le premier moyen de verrouillage est destiné à maintenir ce premier élément de rigidification dans l'embout.

L'invention se caractérise en ce que l'embout d'extrémité comporte au moins une seconde butée de positionnement de manière à coopérer indifféremment avec un premier ou un deuxième type d'élément de rigidification de dimensions différentes l'un de l'autre. Par « dimensions », on entend ici les dimensions de l'extrémité de l'élément de rigidification destiné à être insérée dans le couloir de réception de l'embout. Les dimensions ici considérées peuvent être les dimensions de l'élément de rigidification définies dans un plan normal à son axe d'allongement longitudinal, à savoir sa largeur et/ou sa hauteur, ou bien la dimension définie selon son axe d'allongement longitudinal, à savoir sa longueur. De façon avantageuse, les premières butées de positionnement sont agencées dans l'embout de sorte à être opérationnelles lorsque le premier type d'élément de rigidification est inséré dans le couloir de réception, et ladite au moins seconde butée de positionnement est opérationnelle lorsque le deuxième type d'élément de rigidification est inséré dans le couloir de réception de l'embout. Bien entendu, les différents types d'élément de rigidification sont introduits alternativement dans l'embout. Ainsi, l'invention permet à un même embout d'extrémité de s'adapter sur des éléments de rigidification de dimensions différentes et donc à des modèles différents de balai d'essuyage.

Selon une autre caractéristique de l'invention, les premières butées et au moins une seconde butée de positionnement s'étendent à l'intérieur du couloir de réception depuis au moins une paroi de l'embout. En d'autres termes, les butées de positionnement peuvent être agencées à l'intérieur de l'embout, depuis une paroi latérale, de manière à être perpendiculaires ou sensiblement perpendiculaires à l'axe d'allongement longitudinal de l'élément de rigidification lorsque celui-ci est présent dans le couloir de réception de l'embout, et elles peuvent être agencées sensiblement parallèlement à l'axe d'allongement longitudinal lorsqu'elles s'étendent depuis une paroi de fond de l'embout. Les premières butées et la au moins une seconde butée de positionnement peuvent ainsi être en saillie d'au moins une paroi latérale de l'embout, étant entendu que la ou les parois latérales délimitent au moins une partie du couloir de réception.

Selon une autre caractéristique de l'invention, une extrémité libre d'au moins une seconde butée de positionnement est disposée plus proche du plan médian longitudinal qu'une extrémité libre des premières butées de positionnement. Par les termes « plan médian longitudinal », on entend un plan passant par le milieu du couloir de réception de l'embout. Ainsi, les premières butées et au moins une seconde butée de positionnement sont respectivement aptes à guider l'insertion d'un élément de rigidification d'un premier et d'un deuxième type d'élément de rigidification, le premier type d'élément de rigidification étant de plus grandes dimensions que le deuxième type d'élément de rigidification.

On pourra prévoir qu'au moins une seconde butée de positionnement est agencée dans le couloir de sorte à être en retrait des premières butées de positionnement par rapport à la première extrémité longitudinale de l'embout et le sens d'insertion de l'élément de rigidification dans l'embout. Autrement dit, les premières butées de positionnement peuvent être atteintes par la première extrémité longitudinale d'un embout lors de son insertion dans l'embout avant la ou les secondes butées de positionnement.

Notamment dans ce cas, on pourra prévoir en outre qu'au moins une seconde butée de positionnement présente une première face de butée pour le premier type d'élément de rigidification et une deuxième face de butée pour le deuxième type d'élément de rigidification. Comme leur nom l'indique, les faces de butées sont destinées à être en contact avec un type d'élément de rigidification lors de son introduction dans le couloir de réception de l'embout. On comprend qu'une telle seconde butée de positionnement, dont le rôle est d'assurer le positionnement du deuxième type d'élément de rigidification, pourra participer en outre, par action de sa première face de butée, à la mise en position du premier type d'élément de rigidification.

Selon une série de caractéristiques, prises seules ou en combinaison, on pourra prévoir que :
- au moins une seconde butée de positionnement comporte des moyens escamotables au passage d'un premier type d'élément de rigidification. Par le terme « escamotable », on entend des moyens susceptibles de se courber ou bien de se casser de sorte à permettre le passage du premier type d'élément de rigidification, de plus grandes dimensions que celles du deuxième type d'élément de rigidification, dans le couloir de réception de l'embout. De la sorte, une seconde butée de positionnement peut être placée en amont d'une première butée de positionnement, sans empêcher l'introduction dans le couloir de réception d'un premier type d'élément de rigidification. Le terme « amont » est défini par rapport au sens d'introduction d'un élément de rigidification dans le couloir de réception. De façon avantageuse, cette caractéristique de l'invention permet une plus grande liberté dans l'agencement des butées de positionnement dans le couloir de réception ;
- les moyens escamotables comportent au moins un pion escamotable agencé dans le prolongement d'un pion fixe, ce pion fixe formant partie d'une première butée de positionnement ;
- le pion escamotable présente une épaisseur moindre que l'épaisseur du pion fixe. Par le terme « épaisseur », on entend ici la ou les dimensions d'un pion dans un plan normal ou sensiblement normal à son axe d'allongement dans le couloir de réception de l'embout.
- les moyens escamotables sont des pions distincts de pions fixes formant les premières butées.

On pourra prévoir la présence dans l'embout d'un deuxième moyen de verrouillage, et, dans ce contexte, le premier et le deuxième moyen de verrouillage peuvent s'étendre respectivement depuis deux parois latérales opposées délimitant le couloir de réception de l'embout.

Selon une autre caractéristique de l'invention, au moins une troisième butée de positionnement est agencée, par exemple sous forme d'un pion, en saillie d'une paroi de fond. Par les termes « paroi de fond », on entend ici une paroi délimitant le couloir de réception qui est opposée à la première extrémité longitudinale de l'embout et adjacente aux parois latérales. De préférence, le pion disposé en saillie de la paroi de fond a son extrémité libre configurée pour coopérer avec l'extrémité d'un élément de rigidification introduit dans l'embout. Par exemple, ce pion peut être de forme et de dimensions complémentaires ou compatibles avec un logement ou une encoche présente au niveau de l'extrémité d'un élément de rigidification.

L'embout peut comporter une paroi transversale sur laquelle débouche le couloir de réception des éléments de rigidification. Ladite paroi transversale forme en particulier avec une portion d'extrémité de la paroi latérale de l'embout un logement du corps du balai d'essuyage. Ce corps comporte notamment l'élément de support et le déflecteur, intégré ou non. Autrement dit, la première extrémité de l'embout peut comprendre une cavité apte à accueillir une partie du balai d'essuyage de sorte à assurer un meilleur maintien de l'embout sur ledit balai. Bien entendu, le couloir de réception débouche dans le fond de ladite cavité.

Par ailleurs, la présente invention concerne également un ensemble d'essuyage comprenant un balai d'essuyage entraîné en mouvement par un ensemble motorisé, ledit balai comportant une lame d'essuyage et un élément de rigidification, comportant à au moins une de ses extrémités longitudinales un embout d'extrémité tel que défini ci-dessus.

On pourra prévoir que l'embout d'extrémité est configuré pour être monté sur une extrémité longitudinale d'un élément de rigidification du balai, un même embout étant utilisé aussi bien avec un premier ou un deuxième type d'élément de rigidification.

Et l'on pourra prévoir que l'embout d'extrémité comporte un pion disposé en saillie d'une paroi de fond dont la forme et les dimensions sont aptes à coopérer avec une encoche présente au niveau d'une extrémité de l'élément de rigidification.

Bien entendu, les caractéristiques, les variantes et les différentes formes de réalisation de l'invention mentionnées ci-dessus peuvent être associées les unes avec les autres, selon diverses combinaisons.

Les caractéristiques de l'invention mentionnées ci-dessus ainsi que d'autres, apparaîtrons plus clairement à la lecture ci-dessous de la description détaillée d'exemples non limitatifs, en se référant aux dessins annexés suivants :
- la figure 1 est une vue schématique et en perspective d'un ensemble d'essuyage selon l'invention ;
- les figures 2a et 2b sont des vues d'un ensemble d'essuyage configuré pour comporter un premier type d'élément de rigidification (figure 2a) ou un deuxième type d'élément de rigidification (figure 2b), en coupe transversale selon le plan de coupe II-II, représenté à la figure 1 ;
- les figures 3 et 4 sont des coupes partielles longitudinales vues de dessus, selon le plan de coupe A-A', représenté aux figures 2a et 2b, d'un embout d'extrémité, selon un premier mode de réalisation de l'invention, fixé sur un premier type d'élément de rigidification d'un balai d'essuyage, respectivement sur un deuxième type d'élément de rigidification d'un balai d'essuyage ;
- les figures 5 et 6 sont des coupes partielles longitudinales vues de dessus, selon le plan de coupe A-A', représenté aux figures 2a et 2b, d'un embout d'extrémité, selon un deuxième mode de réalisation de l'invention, fixé sur un deuxième type d'élément de rigidification d'un balai d'essuyage, respectivement sur un premier type d'élément de rigidification d'un balai d'essuyage ;
- la figure 7 est une coupe partielle longitudinale vue de dessus, selon le plan de coupe A-A', représenté aux figures 2a et 2b, d'un troisième mode de réalisation de l'invention ;
- la figure 8 est une coupe partielle longitudinale, vue de dessus, selon le plan de coupe A-A', représenté aux figures 2a et 2b, d'un quatrième mode de réalisation de l'invention.

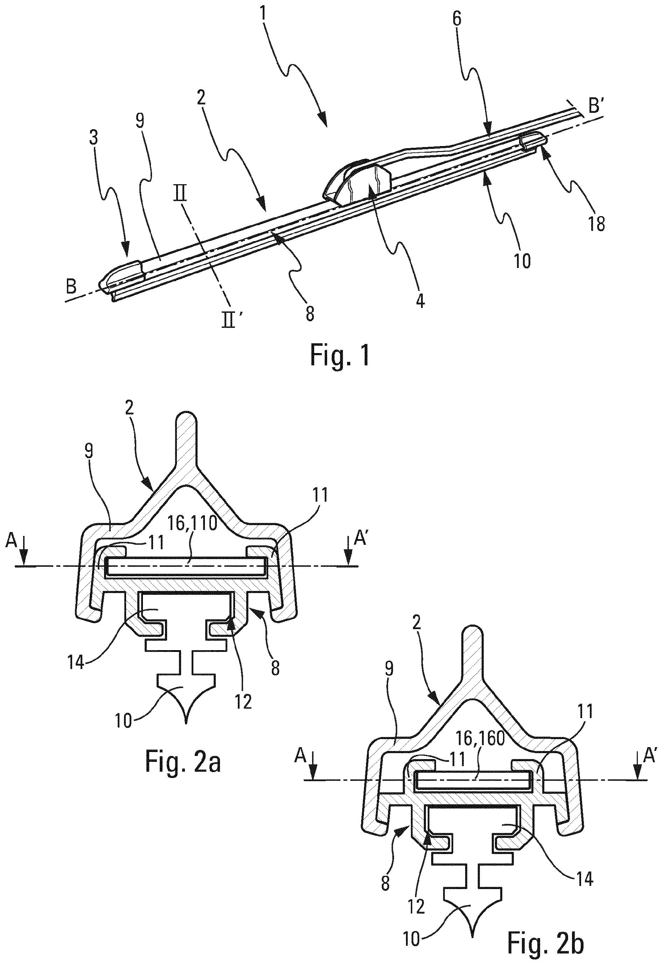

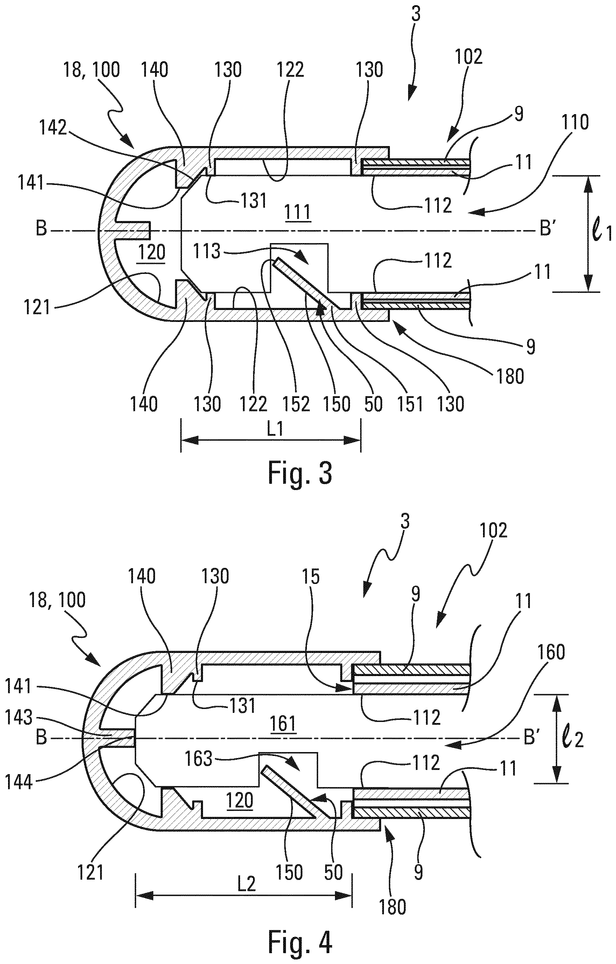

Un ensemble d'essuyage 1 est illustré sur la figure 1. Il comprend principalement un balai d'essuyage 2 maintenu par l'intermédiaire d'un connecteur 4 à l'extrémité d'un bras d'actionnement 6. Le bras d'actionnement est mis en mouvement par un moteur (non représenté) de manière à permettre au balai d'essuyage, lors de son déplacement, de nettoyer au moins une partie du pare-brise d'un véhicule. Pour cela, le balai d'essuyage 2 comprend un élément de support 8 (visible sur la figure 2) configuré pour porter une lame d'essuyage 10 et la maintenir contre la surface du pare-brise. Plus précisément, comme illustré à la figure 2, l'élément de support 8 présente dans une partie inférieure, tournée vers le pare-brise en position d'utilisation, une rainure 12 dans laquelle est glissé le talon 14 de la lame d'essuyage, et il comprend en outre un logement pour un élément de rigidification ou vertèbre 16 qui s'étend le long du balai d'essuyage, notamment le long d'un axe d'allongement B-B' (visible sur la figure 3).

Un déflecteur 9 est disposé en recouvrement de l'élément de support 8. Dans l'exemple illustré, ce déflecteur est une pièce distincte de l'élément de support, fixé sur celui-ci. On pourra comprendre que sans sortir du contexte de l'invention, le déflecteur pourrait être réalisé d'une seule pièce avec l'élément de support.

Le logement pour l'élément de rigidification est délimité latéralement, c'est à dire transversalement à l'axe d'allongement B-B', par des parois 11 qui forment un rail de guidage pour l'élément de rigidification. Au moins deux types d'éléments de rigidification peuvent être insérés dans l'élément de support du balai, distinguables par leurs dimensions. Afin de réaliser un maintien latéral correct de chacun de ces éléments de rigidification, on prévoit un premier élément de support (figure 2a) configuré pour comprendre un premier type d'élément de rigidification, avec des parois 11 écartées l'une de l'autre selon une première dimension (première largeur), et on prévoit un deuxième élément de support (figure 2b) configuré pour comprendre un deuxième type d'élément de rigidification, avec des parois 11 écartées l'une de l'autre d'une deuxième dimension (deuxième largeur) plus petite que la première dimension.

On peut observer sur les figures 2a et 2b que l'écartement des parois 11 est modifié selon le type d'élément de rigidification prévu dans le balai d'essuyage, et que l'écartement qui en résulte avec le spoiler est variable également, tandis que la partie inférieure de l'élément de support, configurée pour loger la lame d'essuyage, est inchangée.

Une fois la lame d'essuyage 10 mise en place, par insertion du talon dans la rainure, les extrémités longitudinales de la rainure 12 sont obturées à l'aide d'embouts d'extrémité 18, visibles sur la figure 1. Les embouts d'extrémité permettent d'éviter que la lame d'essuyage se déplace le long de la rainure et vienne ainsi à se détacher du balai d'essuyage. Chaque embout d'extrémité 18 comprend un couloir de réception 120 configuré pour accueillir et bloquer une extrémité de l'élément de rigidification. La fixation de l'embout en position est obtenue par coopération de l'embout d'extrémité avec l'extrémité correspondante de l'élément de rigidification 16 dépassant de l'élément de support 8. Le couloir de réception de l'élément de rigidification débouche à une première extrémité longitudinale 180 de l'embout 18.

On va décrire par la suite plusieurs modes de réalisation de ce couloir de réception et des butées de positionnement qui y sont disposées, afin de former avec un élément de rigidification donné un dispositif de maintien 3 de la lame d'essuyage dans le balai et notamment dans l'élément de support, étant entendu que selon l'invention, une pluralité de butées de positionnement permet de coopérer indifféremment avec un premier ou un deuxième type d'élément de rigidification.

Les figures 3 et 4 illustrent un premier mode de réalisation d'un embout d'extrémité 100 fixé sur un balai d'essuyage 102 comportant une lame d'essuyage agencée en dessous d'un élément de rigidification.

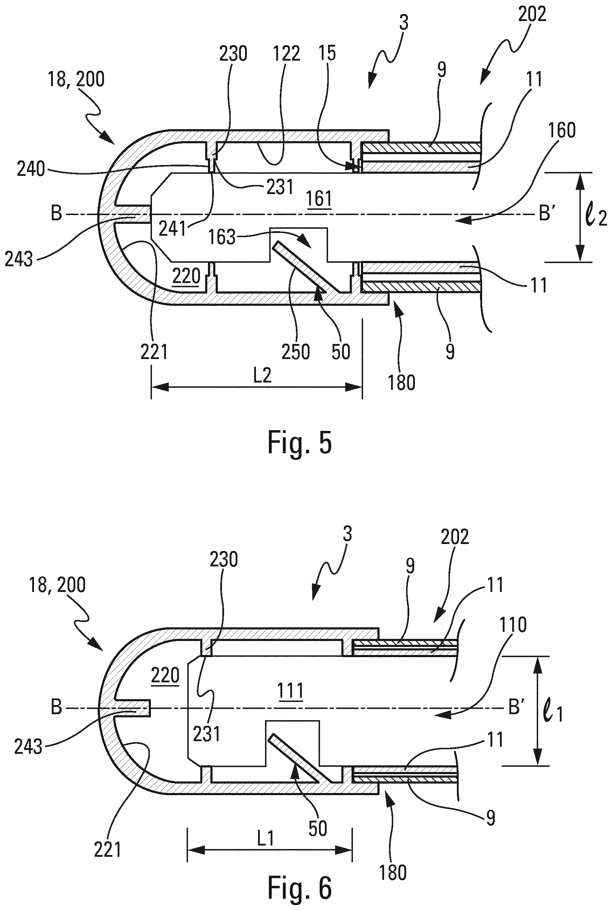

Sur la figure 3, on a illustré l'embout d'extrémité coopérant avec un élément de rigidification d'un premier type 110, dépassant longitudinalement du balai d'essuyage 102. Le premier type d'élément de rigidification est caractérisé par une première largeur l₁, et par une première longueur L₁ (la référence étant visible notamment sur la figure 6). Dans la présente invention, on entend par largeur la distance, perpendiculaire à l'axe d'allongement B-B', séparant les parois latérales 112 des éléments de rigidification, agencées en regard des parois définissant le rail de guidage sur l'élément de support. Et on entend par longueur de l'élément de rigidification, la distance le long de l'axe d'allongement sur laquelle l'élément de rigidification dépasse en saillie de l'extrémité de l'élément de support.

L'extrémité 111 de l'élément de rigidification est insérée dans un couloir de réception 120 ménagé dans l'embout 100. Le couloir de réception est délimité par une paroi de fond 121 adjacente aux parois latérales 122 du couloir. Chaque paroi latérale 122 comprend au moins deux premières butées de positionnement 130 s'étendant transversalement à l'intérieur du couloir de réception de sorte à être en saillie de leur paroi latérale 122 correspondante. Dans l'exemple illustré, les premières butées de positionnement prennent la forme de pions. Plus précisément, les premières butées de positionnement sont agencées dans le couloir de réception afin que leur extrémité libre formant sommet 131 puisse prendre appui contre les parois latérales 112 de l'élément de rigidification d'un premier type 110 lors de son insertion dans le couloir de réception. Ainsi, de façon avantageuse, les premières butées de positionnement 130 guident et positionnent l'élément de rigidification d'un premier type 110 lors de son insertion dans l'embout 100. Autrement dit, les premières butées de positionnement 130 assurent le maintien latéral de l'extrémité 111 de l'élément de rigidification d'un premier type dans le couloir de réception 120.

L'embout 100 comporte également des deuxièmes butées de positionnement 140 positionnées entre les premières butées 130 et la paroi de fond 121. Dans l'exemple illustré, les deuxièmes butées de positionnement consistent en des pions. Tout comme pour les premières butées de positionnement précédemment décrites, on comprendra que sans sortir du contexte de l'invention, les deuxièmes butées pourraient prendre d'autres formes que celles décrites, telles que des nervures. Les deuxièmes butées 140 s'étendent également transversalement à l'intérieur du couloir de réception de sorte à être en saillie des parois latérales 122. Chaque deuxième butée 140 comprend une extrémité libre formant sommet 141 dépassant les sommets 131 des premières butées 130, de sorte que les sommets 141 des deuxièmes butées soient plus proche du plan médian BB' du couloir de réception que les sommets 131 des premières butées. Ainsi, les faces latérales 142 des deuxièmes butées tournées à l'opposé de la paroi de fond 121 bloquent la progression longitudinale de l'extrémité 111 de l'élément de rigidification d'un premier type 110 dans le couloir de réception 120. De préférence, les faces latérales 142 présentent une forme complémentaire à celle de l'extrémité 111 de l'élément de rigidification d'un premier type, ici une surface en biseau, de manière à favoriser une plus grande surface de contact entre ces éléments.

Afin d'empêcher le retrait de l'élément de rigidification du couloir de réception 120 lorsque l'extrémité 111 est en butée contre les deuxièmes butées de positionnement 140, le couloir de réception comporte également un premier moyen de verrouillage constitué d'une lame flexible 150. Une première extrémité 151 de la lame flexible est maintenue sur une paroi latérale 122 du couloir de réception entre deux premières butées 130 s'étendant en saillie de cette paroi latérale, de sorte que l'extrémité libre opposée 152 soit orientée vers la paroi de fond 121 et s'étende vers l'axe longitudinal du couloir de réception au-delà des sommets 131 des premières butées de positionnement. La lame flexible 150 est suffisamment souple pour se courber lors du passage de l'extrémité 111 afin de ne pas gêner son insertion. Elle est également suffisamment élastique pour permettre à son extrémité libre 152 de revenir à sa position initiale et ainsi se loger dans une cavité 113 de l'élément de rigidification 110. La figure illustre la cavité 113 débouchant dans une paroi latérale 112 de l'élément de rigidification 110. La lame 150 empêche alors le retrait de l'élément de rigidification d'un premier type 110 du couloir en servant de butée prenant appui dans la cavité 113.

Sur la figure 4, on a illustré le même embout d'extrémité qu'à la figure 3 coopérant avec un élément de rigidification d'un deuxième type 160, plus précisément, au niveau de son extrémité 161. L'élément de rigidification d'un deuxième type 160 se différencie de l'élément de rigidification du premier type 110 d'une part en ce qu'il présente une deuxième largeur 12 plus petite que la première largeur l₁ décrite précédemment, et d'autre part en ce qu'il présente une deuxième longueur L₂ plus grande que la première longueur L₁ décrite précédemment, c'est-à-dire qu'il dépasse plus en saillie de l'extrémité de l'élément de support que ne le fait l'élément de rigidification d'un premier type.

De ce fait, les sommets 131 des premières butées 130 ne sont plus aptes à guider l'insertion de l'extrémité 161 de l'élément de rigidification de deuxième type 160 dans le couloir de réception 120. Ce guidage est alors réalisé par les sommets 141 des deuxièmes butées 140 comme représenté sur la figure 4.

On comprend que la présence des deuxièmes butées participent au guidage et au maintien en position de chaque type d'élément de rigidification, en coopération avec les premières butées lorsqu'un premier type d'élément de rigidification est inséré, et en coopération avec une troisième butée de positionnement 143 lorsqu'un deuxième type d'élément de rigidification est inséré.

Cette troisième butée est ménagée en saillie de la paroi de fond 121, et l'extrémité libre formant sommet 144 de cette troisième butée 143 est orientée et agencée dans le couloir de réception de sorte à stopper la progression de l'extrémité 161 de l'élément de rigidification 160 dans le couloir de réception 120. Dans l'exemple illustré, cette troisième butée 143 présente la forme d'un pion. De même que pour le premier type d'élément de rigidification 130, l'élément de rigidification d'un deuxième type 160 comporte une cavité 163 apte à coopérer avec la lame flexible 150 pour empêcher son retrait du couloir de réception 120.

On comprend que les dimensions, les formes et/ou les agencements des premières butées 130, des deuxièmes butées 140, de la troisième butée 143 et de la lame 150 pourront être modifiés par rapport à ce qui a été présenté, pour s'adapter à des formes et des dimensions spécifiques d'éléments de rigidification, dès lors que ces butées de positionnement et la lame de verrouillage permettent de guider et verrouiller des éléments de rigidification d'un premier et d'un deuxième type.

On va maintenant décrire d'autres modes de réalisation, en se référant aux figures 5 à 8 sur lesquelles les références dont les dizaines sont identiques aux références mentionnées ci-dessus désignent des éléments identiques ou similaires.

Les figures 5 et 6 illustrent un deuxième mode de réalisation d'un embout 200 d'extrémité fixé sur un balai d'essuyage 202. Ce deuxième mode de réalisation diffère du premier en ce que les deuxièmes butées 240, agencées au niveau des parois latérales 222 du couloir de réception 220, sont à présent agencées au sommet 231 des premières butées 230. De même que ci-dessus, les sommets 241 des deuxièmes butées permettent de guider la progression et le maintien transversal de l'élément de rigidification 160 d'un deuxième type dans le couloir de réception 220. Dans l'exemple illustré, l'extrémité de l'élément de rigidification d'un deuxième type 160 est alors stoppée par une troisième butée 243 présente sur la paroi de fond 221.

Les deuxièmes butées de positionnement 240 sont d'épaisseur inférieure à l'épaisseur des premières butées 230 afin de permettre le passage de l'élément de rigidification d'un premier type comme illustré à la figure 6. Lors de l'insertion de cet élément de rigidification d'un premier type 110, son extrémité 111 entre en contact avec les deuxièmes butées 240 disposées plus proches de l'axe longitudinal du couloir de réception que les premières butées 230. Par ailleurs, l'épaisseur moindre des deuxièmes butées de positionnement rend celles-ci escamotables, c'est-à-dire ici cassables ou pliables au passage de l'extrémité de l'élément de rigidification d'un premier type 110. Celle-ci brise ou plie les deuxièmes butées 240 présentes au sommet des premières butées 230. Ainsi, les sommets 231 des premières butées 230 sont mis à nu de manière à pouvoir guider l'insertion de l'extrémité 111 de l'élément de rigidification d'un premier type 110 dans le couloir de réception 220 comme décrit ci-dessus. Dans une variante non représentée, l'extrémité de l'élément de rigidification d'un premier type 110 est alors stoppée par la troisième butée 243 présente sur la paroi de fond 221.

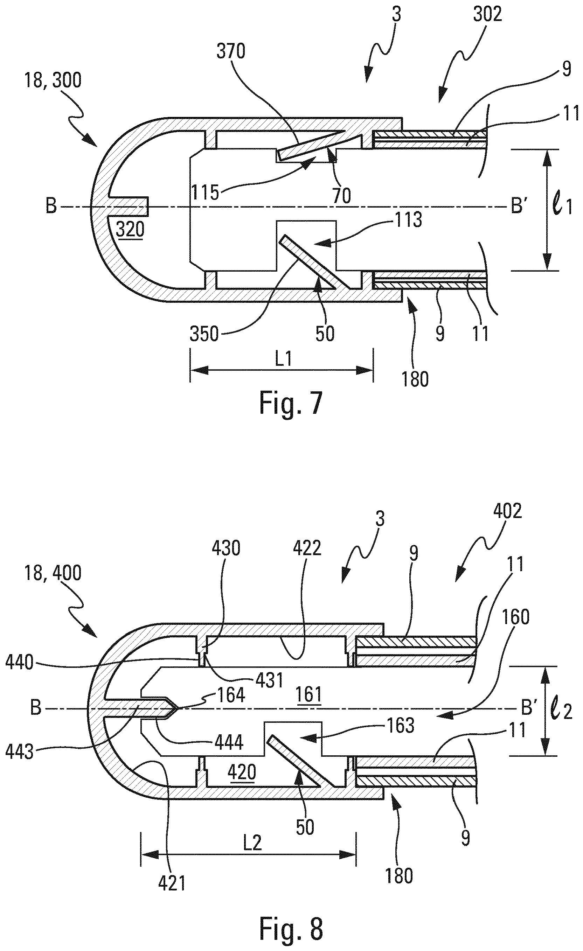

La figure 7 illustre un troisième mode de réalisation dans lequel l'embout 300, monté à une extrémité d'un balai d'essuyage 302, est une variante du deuxième mode de réalisation représenté à la figure 6. Selon cette variante, l'embout 300 comprend un deuxième moyen de verrouillage constitué d'une deuxième lame flexible 370, agencée de la même manière que la lame 350 mais sur une face latérale opposée. Cette deuxième lame flexible 370 est configurée pour coopérer avec une troisième cavité 115 de l'élément de rigidification. La figure illustre la cavité 115 débouchant sur une paroi latérale de l'extrémité de l'élément de rigidification de manière à assurer un meilleur maintien de ladite extrémité dans le couloir 320. Il est à noter que la troisième cavité peut être de forme et/ou de dimensions différentes comparée à la première cavité. Bien entendu, cette variante peut également être mise en oeuvre en combinaison avec le premier mode de réalisation décrit ci-dessus.

La figure 8 illustre un quatrième mode de réalisation dans lequel l'embout 400, monté à une extrémité d'un balai d'essuyage 402, est une variante du deuxième mode de réalisation représenté à la figure 5. Selon cette variante, la troisième butée 443 agencée sur la paroi du fond 421 délimitant le couloir de réception 420 présente à son sommet 444 une forme complémentaire d'une deuxième cavité 164 présente à l'extrémité 161 de l'élément de rigidification 160 d'un deuxième type. Ces éléments sont de forme complémentaire afin d'assurer un meilleur maintien de l'élément de rigidification dans le couloir de réception tant longitudinalement que transversalement. Bien entendu, cette variante peut également être adaptée à chacun des modes de réalisation décrit ci-dessus et à l'utilisation avec l'un ou l'autre des types d'éléments de rigidification. Il est notable que le pion ou la nervure formant cette troisième butée en saillie de la paroi de fond s'étend sensiblement selon la direction d'insertion de l'élément de rigidification dans l'embout d'extrémité et que cet élément de rigidification est inséré jusqu'à ce que le pion ou la nervure pénètre à l'intérieur de l'élément de rigidification, dans une encoche de forme correspondante. Il est notamment intéressant à cet effet que le pion ou la nervure présente une extrémité libre formant sommet 444 en forme permettant une rampe pour faciliter l'insertion de l'élément de rigidification.

Dans les exemples illustrés, l'embout 18 comporte une paroi transversale formant avec une portion d'extrémité de la paroi latérale de l'embout un logement 15 du corps du balai d'essuyage. Ce corps comporte notamment l'élément de support et le déflecteur, intégré ou non.

Les premières et deuxièmes butées des embouts d'extrémité illustrés sont positionnés de façon symétrique par rapport à un plan perpendiculaire à l'élément de rigidification et passant par l'axe longitudinal d'allongement B-B'.

## Revendications

1. Embout (18, 100, 200, 300, 400) d'extrémité d'un balai d'essuyage (2, 102, 202, 302,402) muni d'un élément de rigidification (110, 160) qui s'étend sensiblement selon un axe d'allongement longitudinal, ledit embout (110, 160) comportant un couloir de réception (120, 220, 320, 420) de l'élément de rigidification débouchant à une première extrémité longitudinale (180) de l'embout, ainsi que des premières butées (130, 230, 330, 430) de positionnement et un premier moyen de verrouillage (150, 250, 350) de cet élément de rigidification à l'intérieur du couloir de réception (120, 220, 320, 420), **caractérisé en ce qu'**il comporte au moins une seconde butée (140, 240, 440) de positionnement, de manière à coopérer indifféremment avec un premier ou un deuxième type d'élément de rigidification de dimensions différentes l'un de l'autre, lesdites premières butées (130, 230, 330, 430) de positionnement étant opérationnelles lorsque ledit premier type d'élément de rigidification (110) est inséré dans le couloir de réception et ladite au moins une seconde butée (140, 240, 440) de positionnement étant opérationnelle lorsque ledit deuxième type d'élément de rigidification (160) est inséré dans le couloir de réception (120, 220, 320, 420) de l'embout (100, 200, 300, 400).

2. Embout d'extrémité selon la revendication 1, **caractérisé en ce que** lesdites premières butées (130, 230, 330, 430) et ladite au moins seconde butée (140, 240, 440) s'étendent transversalement à l'intérieur du couloir de réception (120, 220, 320, 420).

3. Embout d'extrémité selon la revendication 1 ou 2, **caractérisé en ce qu'**une extrémité libre (141, 241) d'au moins une seconde butée (140, 240) de positionnement est disposée plus proche d'un plan médian longitudinal qu'une extrémité libre (131, 231) des premières butées (130, 230) de positionnement.

4. Embout d'extrémité selon l'une des revendications précédentes, **caractérisé en ce que** les premières et au moins une seconde butée de positionnement sont en saillie d'au moins une paroi latérale (122) de l'embout (100).

5. Embout d'extrémité selon la revendication précédente, **caractérisé en ce qu'**au moins une seconde butée (140) de positionnement est agencée dans le couloir (120) de sorte à être en retrait des premières butées (130) de positionnement par rapport à la première extrémité longitudinale (180) de l'embout.

6. Embout d'extrémité selon la revendication précédente, **caractérisé en ce qu'**au moins une seconde butée (140) de positionnement présente une première face (142) de butée pour le premier type d'élément de rigidification (110) et une deuxième face (141) de butée pour le deuxième type d'élément de rigidification (160).

7. Embout d'extrémité selon l'une quelconque des revendications précédentes, **caractérisé en ce qu'**au moins une seconde butée (240) de positionnement consiste en des moyens escamotables au passage d'un premier type d'élément de rigidification (110).

8. Embout d'extrémité selon la revendication précédente, **caractérisé en ce que** les moyens escamotables comportent au moins un pion escamotable (240) agencé dans le prolongement d'un pion fixe (230) formant partie d'une première butée de positionnement.

9. Embout d'extrémité selon la revendication précédente, **caractérisé en ce qu'**au moins un pion escamotable (240) présente une épaisseur moindre que l'épaisseur d'un pion fixe (230).

10. Embout d'extrémité selon la revendication 7, **caractérisé en ce que** les moyens escamotables sont des pions escamotables distincts de pions fixes formant les premières butées.

11. Embout d'extrémité selon l'une des revendications précédentes, **caractérisé en ce qu'**il comporte un deuxième moyen de verrouillage (370).

12. Embout d'extrémité selon la revendication précédente, **caractérisé en ce que** le premier (350) et le deuxième moyen de verrouillage (370) s'étendent respectivement depuis deux parois latérales opposées délimitant le couloir de réception (320) de l'embout (300).

13. Embout d'extrémité selon l'une des revendications précédentes, **caractérisé en ce qu'**une troisième butée (143, 243, 443) de positionnement comporte un pion disposé en saillie d'une paroi de fond (121, 221, 421).

14. Embout d'extrémité selon l'une des revendications précédentes, **caractérisé en ce qu'**il comporte une paroi transversale sur laquelle débouche ledit couloir de réception des éléments de rigidification, ladite paroi transversale formant avec une portion d'extrémité de la face latérale de l'embout un logement (15) du corps du balai d'essuyage.

15. Ensemble d'essuyage comprenant un balai d'essuyage (2, 102, 202, 302, 402) comportant au moins une lame d'essuyage et un élément de rigidification (110, 160), comportant à au moins une de ses extrémités longitudinales un embout (100, 200, 300, 400) selon l'une des revendications 1 à 14 configuré pour être monté sur une extrémité longitudinale de l'élément de rigidification du balai, un même embout étant utilisé aussi bien avec un premier ou un deuxième type d'élément de rigidification.

16. Ensemble d'essuyage selon la revendication précédente, **caractérisé en ce que** l'embout d'extrémité comporte un pion (443) disposé en saillie d'une paroi de fond (421) dont la forme et les dimensions sont aptes à coopérer avec une encoche (164) présente au niveau d'une extrémité (161) d'un élément de rigidification (160).

## Patentansprüche

1. Endstück (18, 100, 200, 300, 400) eines Scheibenwischblatts (2, 102, 202, 302, 402), das mit einem Versteifungselement (110, 160) versehen ist, das sich im Wesentlichen entlang einer longitudinalen Verlängerungsachse erstreckt, wobei das Endstück (110, 160) einen Aufnahmegang (120, 220, 320, 420) des Versteifungselements, der an einem ersten Längsende (180) des Endstücks mündet, sowie erste Positionierungsanschläge (130, 230, 330, 430) und ein erstes Verriegelungsmittel (150, 250, 350) dieses Versteifungselements im Inneren des Aufnahmegangs (120, 220, 320, 420) aufweist, **dadurch gekennzeichnet, dass** es mindestens einen zweiten Positionierungsanschlag (140, 240, 440) derart aufweist, um gleichermaßen mit einem ersten oder einem zweiten Typ von Versteifungselement mit Abmessungen, die voneinander verschieden sind, zusammenzuwirken, wobei die ersten Positionierungsanschläge (130, 230, 330, 430) betriebsbereit sind, wenn der erste Typ von Versteifungselement (110) in dem Aufnahmegang eingefügt ist, und der mindestens eine zweite Positionierungsanschlag (140, 240, 440) betriebsbereit ist, wenn der zweite Typ von Versteifungselement (160) in dem Aufnahmegang (120, 220, 320, 420) des Endstücks (100, 200, 300, 400) eingefügt ist.

2. Endstück nach Anspruch 1, **dadurch gekennzeichnet, dass** sich die ersten Anschläge (130, 230, 330, 430) und der mindestens zweite Anschlag (140, 240, 440) quer im Inneren des Aufnahmegangs (120, 220, 320, 420) erstrecken.

3. Endstück nach Anspruch 1 oder 2, **dadurch gekennzeichnet, dass** ein freies Ende (141, 241) von mindestens einem zweiten Positionierungsanschlag (140, 240) näher an einer Längsmittelebene als ein freies Ende (131, 231) der ersten Positionierungsanschläge (130, 230) angeordnet ist.

4. Endstück nach einem der vorhergehenden Ansprüche, **dadurch gekennzeichnet, dass** die ersten und mindestens ein zweiter Positionierungsanschlag über mindestens eine Seitenwand (122) des Endstücks (100) hinausragen.

5. Endstück nach dem vorhergehenden Anspruch, **dadurch gekennzeichnet, dass** mindestens ein zweiter Positionierungsanschlag (140) in dem Gang (120) derart ausgebildet ist, um von den ersten Positionierungsanschlägen (130) in Bezug auf das erste Längsende (180) des Endstücks zurückversetzt zu sein.

6. Endstück nach dem vorhergehenden Anspruch, **dadurch gekennzeichnet, dass** mindestens ein zweiter Positionierungsanschlag (140) eine erste Anschlagfläche (142) für den ersten Typ von Versteifungselement (110) und eine zweite Anschlagfläche (141) für den zweiten Typ von Versteifungselement (160) aufweist.

7. Endstück nach einem der vorhergehenden Ansprüche, **dadurch gekennzeichnet, dass** mindestens ein zweiter Positionierungsanschlag (240) aus Mitteln besteht, die beim Durchgang eines ersten Typs von Versteifungselement (110) einziehbar sind.

8. Endstück nach dem vorhergehenden Anspruch, **dadurch gekennzeichnet, dass** die einziehbaren Mittel mindestens einen einziehbaren Stift (240) aufweisen, der in der Verlängerung eines festen Stiftes (230) ausgebildet ist, der Teil eines ersten Positionierungsanschlags bildet.

9. Endstück nach dem vorhergehenden Anspruch, **dadurch gekennzeichnet, dass** mindestens ein einziehbarer Stift (240) eine geringere Dicke als die Dicke eines festen Stiftes (230) aufweist.

10. Endstück nach Anspruch 7, **dadurch gekennzeichnet, dass** die einziehbaren Mittel einziehbare Stifte sind, die von den festen Stiften verschieden sind, die die ersten Anschläge bilden.

11. Endstück nach einem der vorhergehenden Ansprüche, **dadurch gekennzeichnet, dass** es ein zweites Verriegelungsmittel (370) aufweist.

12. Endstück nach dem vorhergehenden Anspruch, **dadurch gekennzeichnet, dass** sich das erste (350) und das zweite Verriegelungsmittel (370) jeweils von zwei gegenüberliegenden Seitenwänden erstrecken, die den Aufnahmegang (320) des Endstücks (300) begrenzen.

13. Endstück nach einem der vorhergehenden Ansprüche, **dadurch gekennzeichnet, dass** ein dritter Positionierungsanschlag (143, 243, 443) einen Stift aufweist, der vorstehend von einer Rückwand (121, 221, 421) angeordnet ist.

14. Endstück nach einem der vorhergehenden Ansprüche, **dadurch gekennzeichnet, dass** es eine Querwand aufweist, an der der Aufnahmegang der Versteifungselemente mündet, wobei die Querwand mit einem Endabschnitt der Seitenfläche des Endstücks eine Aufnahme (15) des Körpers des Scheibenwischerblatts bildet.

15. Wischeranordnung, umfassend ein Scheibenwischerblatt (2, 102, 202, 302, 402), das mindestens eine Wischleiste und ein Versteifungselement (110, 160) aufweist, das an mindestens einem seiner Längsenden ein Endstück (100, 200, 300, 400) nach einem der Ansprüche 1 bis 14 aufweist, das konfiguriert ist, um an einem Längsende des Versteifungselements des Wischers befestigt zu werden, wobei ein gleiches Endstück sowohl mit einem ersten als auch mit einem zweiten Typ von Versteifungselement verwendet wird.

16. Wischeranordnung nach dem vorhergehenden Anspruch, **dadurch gekennzeichnet, dass** das Endstück einen Stift (443) aufweist, der vorstehend von einer Rückwand (421) angeordnet ist, dessen Form und Abmessungen geeignet sind, mit einer Kerbe (164) zusammenzuwirken, die an einem Ende (161) eines Versteifungselements (160) vorhanden ist.

## Claims

1. End piece (18, 100, 200, 300, 400) for a wiper (2, 102, 202, 302, 402) provided with a rigidifying element (110, 160) which extends substantially according to a longitudinal axis of extension, the said end piece (110, 160) comprising a channel (120, 220, 320, 420) for receipt of the rigidifying element, which channel opens at a first longitudinal end (180) of the end piece, as well as first positioning stops (130, 230, 330, 430), and a first means (150, 250, 350) for locking this rigidifying element in the interior of the receipt channel (120, 220, 320, 420), **characterised in that** it comprises at least one second positioning stop (140, 240, 440), such as to cooperate equally well with a first or second type of rigidifying element with dimensions different from one another, the said first positioning stops (130, 230, 330, 430) being operational when the said first type of rigidifying element (110) is inserted in the receipt channel, and the said at least one second positioning stop (140, 240, 440) being operational when the said second type of rigidifying element (160) is inserted in the channel (120, 220, 320, 420) for receipt of the end piece (100, 200, 300, 400).

2. End piece according to Claim 1, **characterised in that** the said first stops (130, 230, 330, 430) and the said at least one second stop (140, 240, 440) extend transversely in the interior of the receipt channel (120, 220, 330, 420).

3. End piece according to Claim 1 or 2, **characterised in that** a free end (141, 241) of at least one second positioning stop (140, 240) is disposed closer to a longitudinal median plane than a free end (131, 231) of the first positioning stops (130, 230).

4. End piece according to one of the preceding claims, **characterised in that** the first and the at least one second positioning stops project from at least one lateral wall (122) of the end piece (100).

5. End piece according to the preceding claim, **characterised in that** at least one second positioning stop (140) is arranged in the channel (120) such as to be recessed from the first positioning stops (130) relative to the first longitudinal end (180) of the end piece.

6. End piece according to the preceding claim, **characterised in that** at least one second positioning stop (140) has a first stop face (142) for the first type of rigidifying element (110) and a second stop face (141) for the second type of rigidifying element (160).

7. End piece according to any one of the preceding claims, **characterised in that** at least one second positioning stop (240) consists of means which are retractable at the passage of a first type of rigidifying element (110).

8. End piece according to the preceding claim, **characterised in that** the retractable means comprise at least one retractable stud (240) arranged in the extension of a fixed stud (230) which forms part of a first positioning stop.

9. End piece according to the preceding claim, **characterised in that** at least one retractable stud (240) has a thickness smaller than the thickness of a fixed stud (230).

10. End piece according to Claim 7, **characterised in that** the retractable means are retractable studs which are distinct from fixed studs which form the first stops.

11. End piece according to one of the preceding claims, **characterised in that** it comprises a second locking means (370).

12. End piece according to the preceding claim, **characterised in that** the first (350) and second (370) locking means extend respectively from two opposite lateral walls which delimit the channel (320) for receipt of the end piece (300).

13. End piece according to one of the preceding claims, **characterised in that** a third positioning stop (143, 243, 443) comprises a stud which is disposed projecting from a base wall (121, 221, 421).

14. End piece according to one of the preceding claims, **characterised in that** it comprises a transverse wall onto which the said channel for receipt of the rigidifying elements opens, the said transverse wall forming together with an end portion of the lateral face of the end piece a receptacle (15) for the body of the wiper.

15. Wiping assembly comprising a wiper (2, 102, 202, 302, 402) comprising at least one wiper blade and a rigidifying element (110, 160) comprising at least at one of its longitudinal ends an end piece (100, 200, 300, 400) according to one of Claims 1 to 14, configured to be fitted on a longitudinal end of the rigidifying element of the wiper, the same end piece being used equally well with a first or a second type of rigidifying element.

16. Wiping assembly according to the preceding claim, **characterised in that** the end piece comprises a stud (443) disposed projecting from a base wall (421), the form and dimensions of which stud can cooperate with a notch (164) present at an end (161) of a rigidifying element (160).
